# EUROPEAN PATENT APPLICATION

(11) **EP 2 763 043 A1**
(43) Date of publication of application: **06.08.2014**
(21) Application number: 13177891.2
(22) Date of filing: 24.07.2013
(51) Int. Cl.: G06F 11/30, G06F 11/34, G06F 9/455, G06F 9/445

(54) **A system, method and apparatus for determining virtual machine performance**

(30) Priority: 04.02.2013 US 201313758685
(71) Applicant: Mitel Networks Corporation, Ottawa, ON K2K 2W7 (CA)
(72) Inventor: Bootland, Thomas C, Arnprior, Ontario K7S 1R0 (CA); Yeung, Michael, Nepean, Ontario K2G 6R6 (CA); Gray, Tom, Mansfield, Québec J0X 1R0 (CA); Quan, Tom, Nepean, Ontario K2H 9L7 (CA)
(74) Representative: Derry, Paul Stefan

(57) **Abstract**

A method for a computing apparatus for evaluating a virtualized application is provided. Accordingly, performance characteristics for a virtual machine as well as predetermined criteria based on resource requirements for a proposed virtualized application can be received through the network interface of the computing apparatus. The method also allows for determining, at the computing apparatus, whether the predetermined criteria are satisfied based on the performance characteristics and transmitting instructions to cause the proposed virtualized application to be set up within the virtual machine if the predetermined criteria are satisfied. Once the virtualized application is set up, it can be monitored and if the performance characteristics do not satisfy the virtualized application's performance requirements, the virtualized application can be caused to be moved to a different virtual machine. Performance characteristics of a virtual machine can also be determined on the basis of a parking database.

## Description

### Field

The present invention relates generally to virtualization systems, and more particularly to a system and method for adaptive virtualization.

### Background

Virtualization is currently reshaping how systems are implemented. It offers new possibilities to vendors that design and supply systems and operators that license, purchase, use and manage them. Based on virtualization, system vendors, such as internet protocol private branch exchange (IP-PBX) vendors and other telecom system vendors, no longer have to design, manufacture and maintain specific hardware. Instead, they can design their systems to run within standard virtualization systems in standard off the shelf servers and other hardware. Vendors supply an operator who will actually operate the vended system with the appropriate software loads and needed licenses for a fee. The operator then installs and runs the vended system on servers it has access to. These can be privately owned servers running in the operator's data centre or the operator can contract with a cloud service provider to rent time on servers. In the cloud case, the operator does not purchase, house or maintain the physical servers. Significant cost savings to the operator can result.

Cloud service provided servers and others which are used for the provision of virtualization can be inefficient. Inefficiencies can depend on the size and capability of the resources required to run the operator's system. If the operator contracts for excess capacity then resources are wasted. If the operator mistakenly contracts for insufficient capacity then the required application service levels will not be achieved. Currently, the resource allocation is partly addressed by use of service level requests in which the operator can specify the level of service required and the cloud service provider provides these requirements. Due to the fact that operators have varying patterns of resource usage, these requests can be inaccurate

### Brief Description of the Drawings

Fig. 1 is a block diagram of an embodiment of a system for determining virtual machine performance;
Fig. 2 is a block diagram of another embodiment of the system for determining virtual machine performance;
Fig. 3 is a flow chart showing a method of selecting virtual machine performance in accordance with an embodiment; and
Fig. 4 is a block diagram of another embodiment of the system for determining virtual machine performance.

### Detailed Description

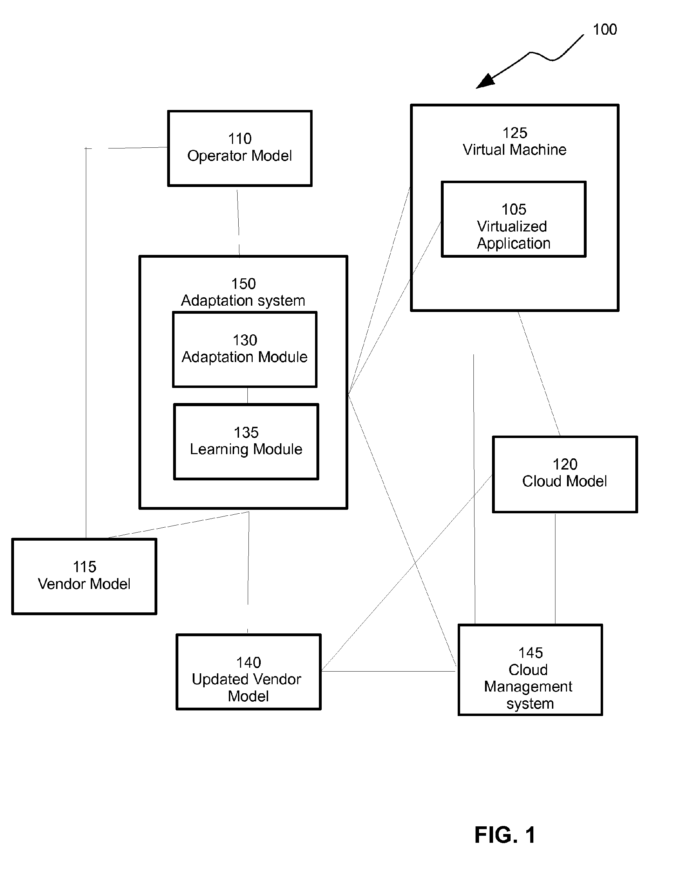

Referring now to Fig. 1 a system for adaptive virtualization is shown at 100. System 100 includes a virtualized application 105. The virtualized application 105 can be any system that can be implemented in a virtual machine (VM). To illustrate system 100, an example embodiment will be used where the system being virtualized is assumed to be a voice over IP (VoIP) controller system such as an IP-PBX. It is to be understood that the present example embodiment is for illustration purposes only, and is not a limitation on scope. In other embodiments and variations, virtualized application 105 can be a database system, a customer relations management systems, a web server or other systems that will now occur to a person of skill in the art that can be implemented as part of a VM.

Continuing with Fig. 1, for a specific virtualized application 105 to be implemented, the operator of the implemented virtualized application 105 can develop an operator model 110 for determining the specific configuration of the virtualized application 105 needed by the operator. The operator model 110, for example, can be developed on the basis of an estimate of the amount, type and level of services required. Accordingly the operator model 110 may be a table of time based estimates of configuration factors for specific time periods during which the system is in use. Configuration factors can be factors such as usage behaviours, use of specific applications and features, maximum size, load and other factors that can be used to specify requirements for a specific system. Configuration factors can include, for example, a maximum size for the system, the features requested, feature options for specific features and the estimated usage for the features and their options.

Continuing with the example embodiment for an IP-PBX operator, an example operator model 110 can include configuration factors for the number of users of specific types such as the number of automatic call centre distribution (ACD) agents, the number of office phones and others, as well as a required quality and quantity of service.

Operator model 110 may be implemented on any computing apparatus, such as a server, a desktop computer, a virtual machine or any other computing apparatus, individual or distributed, that will now occur to a person of skill in the art. Operator model 110 can be generated through various operations, both manual and automated, including by rule based model generators and others that will now occur to a person of skill in the art.

Continuing with Fig. 1, a vendor model 115 is a model provided by a system vendor. The purpose of the vendor model 115 is to provide estimates for the resources required for specific system configurations under conditions of varying load or capacity needs. Accordingly, a vendor model 115 is a model that can generate estimates of the server and other resource requirements to meet various possible capacity needs and other service requirements for a specific configuration of the system vended by a vendor. Vendor model 115 is typically supplied by the vendor along with the vended system to be virtualized.

Vendor model 115 may be implemented on any computing apparatus, such as a server, a desktop computer, a virtual machine or any other apparatus, individual or distributed, that will now occur to a person of skill in the art. In variations, vendor model 115 can be resident on computing apparatus operated by the vendor and accessed through a network. In other variations, vendor model 115 can be resident on computing apparatus operated by the operator, and accessed through a network. Other variations of how the vendor model 115 can be vended and operated will now occur to a person of skill in the art.

The estimated resources can include, for example, number of servers, computing power, mass storage, short-term storage or local memory, network capacity and network latency. The estimated resources can be specified precisely. For example, it can be specified that 100 megabytes of mass storage is needed. In variations, estimated resources can be specified with varying levels of granularity. For example, mass storage may be specified with a coarse level of granularity such as small, medium and large. Alternatively, the estimated resources can be specified with a finer granularity, such as in increments of 100 million instructions per second (MIPs) for computing power. Other resources that can be estimated and mechanisms of specifying such estimates will now occur to a person of skill in the art and are within scope.

Configuration factors specifying a specific system may be used in cooperation with the vendor model 115 to estimate resources for that specific system. For example, vendor model 115 can be used, in cooperation with the operator model 110, to estimate required virtualization services needed from a cloud service provider. Accordingly, the operator model 110 can be used to provide at least some of the configuration factors to vendor model 115. In a variation, the operator model 110 can be used to index into the vendor model 115 to determine the required resources. In a further variation, the operator model 110 can contain a translation element that can convert the contents of the operator model 100 into the syntax and semantics required for communicating with the vendor model 115 to supply data. In yet a further variation, a table or rule-set or such similar mechanisms can be used to perform the conversion. In other embodiments, at least some of the configuration factors can be derived by the vendor model 115 based on data obtained from operator model 110, which can include some other configuration factors. In further embodiments, operator model 110 can be linked to multiple different vendor models provided either by the same vendor or by different vendors. Accordingly, different resource estimates generated by each vendor model 115 can be used in choosing amongst vendors, or different systems provided by the same vendor or both.

Where the vendor is a vendor of an IP-PBX system, the vendor model may identify the resource requirements for a specific IP-PBX system based on the configuration factors for that specific system as specified, at least in part, by the operator model 110 and other factors negotiated. Configuration factors may include a maximum size for the system which is the maximum number of system users. The configuration factors may further include features requested which are the specific user types such as ACD agents, secretarial stations, office phones, and others. The configuration factors may further include feature options for specific user types such as unified messaging, voice mail and other options specified for each user. The configuration factors may additionally include an estimated usage for user types such as the number of calls per hour per user. Additional example configuration factors can be based on quality and service levels required such as factors needed for obtaining a certain media quality.

The estimation performed by vendor model 115 can be multi-dimensional with resource requirements dependent on each of the configuration factors as dimensions. Estimates may be based on the clustering of these dimensions or configuration factors. Accordingly, for any specific system configuration, an estimate of the resources required can be generated on the basis of the grouping together of related configuration factors to get a means for generating estimates. The configuration factors or dimensions may include the number of ACD agents with their selected feature capabilities, the number of office users with unified messaging, and others that can be can be clustered.

Various configurations of features may represent individual dimensions in a multi-dimensional space. For example, a first axis can represent various feature types and a second axis can represent maximum usage for that feature type. Thus, in this example, each feature cluster will have its own two dimensions: the type of feature and maximum possible usage of such a feature. To illustrate, the feature cluster could be ACD agents with the dimension of a feature set and maximum size of ACD operation. Continuing with the example, a third axis can represent the resources required for a currently offered load for a feature cluster of a specified maximum size or load. Accordingly, in this example, the third axis represents the current resource usage for a specific configuration of a system of a certain maximum size under various conditions of load. Once many clusters for many features are considered, this representation becomes a highly dimensional matrix of resource estimates.

A vendor model 115 may be generated from a set of rules supplied by the vendor. Tables representing vendor model 115 can be physically instantiated at system start up or table values may be generated on demand during the operation of the vended system. The tables may be highly dimensional and very large and so some embodiments may instantiate the tables only for the configurations and load or needed capacity ranges that are expected to be applicable for specific systems as opposed to all possible systems.

Continuing with Fig. 1, a cloud service provider, can use a cloud model 120, to identify a capacity to allocate to a virtual machine 125 based on resource requirements specified. Typically, virtual machine 125 is set up on within a private data centre of the cloud service provider. The private data centre of the cloud service provider can include servers, networks and storage units, as well as other components which will now occur to a person of skill in the art. Capacity allocation is accomplished by allocating a portion of the capacity of its data centre to the virtual machine such that the allocated capacity closely matches the capacity identified by cloud model 120. Accordingly, virtual machine 125 can be executing at a single data centre or in a mirrored form across a plurality of data centers.

The cloud service provider may supply the operator with the required addresses and authorization keys and other appropriate access items necessary to access the virtual machine 125. Alternatively other methods of setting up a virtual machine 125 may be used. Using the supplied access items operator can place the virtualized application 105 within the virtual machine 125. Once the virtualized application 105 is set up within the allocated virtual machine 125, the operator can accordingly begin to operate and offer services to its own internal and/or external users. In variations, the virtual machine can be set up in data centres or servers that are operated by other entities such as the operator itself.

Resource estimates generated by vendor model 115 may be used in cooperation with cloud model 120 to identify capacity to allocate. For example, cloud model 120 can be used, in cooperation with the vendor model 115, to identify and allocate the required virtualized resources. In this example, the vendor model 115 can be used to provide at least part of the inputs to cloud model 120. In a variation, the vendor model 115 can contain a translation element that will convert the resource estimates into the syntax and semantics required by a cloud model 120. In a further variation, a table or rule-set or such similar mechanisms can be used to perform the conversion. At least a part of the resource estimates may be derived by the cloud model 120 based on the data obtained from the vendor model 115.

Cloud model 120 may be implemented on any computing apparatus, such as a server, a desktop computer, a virtual machine or any other apparatus, individual or distributed, that will now occur to a person of skill in the art. In variations, cloud model 120 can be resident on computing apparatus operated by the cloud service provider, and accessed through a network. In other variations, cloud model 120 can be resident on computing apparatus operated by the operator or the vendor, and accessed through a network. Other variations of operating and accessing cloud model 120 will now occur to a person of skill in the art.

Continuing with Fig. 1, an adaptation module is indicated at 130. The adaptation module 130 can include policies which indicate when and how often resource updates should be requested for virtual machine 125. The number and timing of updates can be represented by update policies. Update Policies can be set by the operator in part based on capacity factors such as cloud service restrictions, delays, costs and other capacity factors which will now occur to a person of skill in the art. Update policies, can additionally be based on change requirements of the virtualized application 105. For example, to maximize efficiency of resource use, updates to allocated capacity for virtual machine 125 can be requested frequently. Alternatively, with systems where resource changes are costly, or where there is a large delay between request and allocation of capacity, the requests for update can be carried out infrequently.

Update policies can also be based on schedules that reflect estimated resource and capacity requirements of a virtualized application 105. For example, update policies can be based on historical data which can then be used as a way of anticipating application-specific capacity need or load behaviour during certain time of the day. Accordingly, a system operator may know when changes in load or capacity needs for virtualized application 105 occur. For example, daily backup operation in the middle of the night require more input/output and networking capacity to ensure backup operation is completed in timely manner with minimal impact to the normal operation of the application. As a further example, at the start of the day, majority of call centre agents may login to the call centre server within a short period of time, thus increasing the volume of calls handled. Update policies can be set up to predict the need for additional capacity needs during the start of the day to support larger agents login requests. In another example, the schedule for resource and capacity requirement changes can be learned based on historical capacity need or load statistics. In further examples, the schedules can be self- adjusting. Update policies can be set up to reflect these learned and self-adjusting schedules. It will now occur to a person of skill in the art that there are other means of predicting capacity changes on which update policies can be based. These are within scope.

Adaptation module 130 can be implemented on any computing apparatus, such as a server, a desktop computer, a virtual machine or any other apparatus, individual or distributed, that will now occur to a person of skill in the art. In variations, adaptation module 130 can be resident on computing apparatus operated by the vendor and accessed through a network. In other variations, adaptation module 130 can be resident on computing apparatus operated by the operator, and accessed through a network. Other variations of how the adaptation module 130 can be operated will now occur to a person of skill in the art.

Continuing with Fig. 1, a learning module 135 is shown which can take indications of resource usage, or performance indicators, from various components of system 100, interpret these and modify the existing vendor model to generate an updated vendor model 140. The updated vendor model 140 can in turn be used to generate updated resource estimates to reflect the current state of the running system. Accordingly, the learning module 135 functions by taking performance indications from various components of system 100 and transforming these into updated resources requirements for a specific service level that is stored in an updated vendor model 140. The updated vendor model 140 can be stored in the same format as that of vendor model 115 described previously. Moreover, the updated vendor model 140 can be written to a new store. Accordingly, at system initialization, vendor model 115 obtained from the vendor is stored permanently but the vendor model 115 is also be copied to another store as the updated vendor model 140, as shown in Fig 1. Thus, the updated vendor model 140 that is used in the initial resource request is a copy of the vendor model 115. Subsequently, updated vendor model 140 becomes the repository for the learned resource requirements and used for capacity allocation update requests and vendor model 115 is not changed. In a variation, the updated vendor model 140 can overwrite the original vendor model 115. In this variation, the original vendor model is not preserved, and hence system 100 cannot be reset to a state where learning is undone.

The updated vendor model 140 may be provided to a vendor. The vendor can refine the vendor model 115 default values based on updated model or models it received from one or more operators.

Learning module 135 can be implemented on any computing apparatus, such as a server, a desktop computer, a virtual machine or any other apparatus, individual or distributed, that will now occur to a person of skill in the art. In variations, learning module 135 can be resident on computing apparatus operated by the vendor and accessed through a network. In other variations, learning module 135 can be resident on computing apparatus operated by the operator, and accessed through a network. Other variations of how the learning module 135 can be operated will now occur to a person of skill in the art. As shown in Fig. 1, learning module 135 and adaptation module 130 may be implemented as a single adaptation system 150.

Performance indicators can originate from one or more various sources and can be accessed through various application programming interfaces (APIs), for example. These sources include the virtualized application 105, the virtual machine 125 and the cloud provider's management system 145. The cloud service provider can have an internal management system 145 that can determine the performance levels of the virtualized resource that it provides to the system operator. So, for example, cloud management system 145 can monitor CPU usage, memory usage, network usage, network latency and so on. The cloud provider can provide an API to allow an operator to access this information. One example of where the services provided by the cloud management system 145 are useful is the case where virtualized application 105 is exhibiting adequate performance but the reserved resource at the cloud provider is being underutilized. The operator can then reduce the requested resource level to achieve economy without sacrificing the service it requires.

The virtual machine 125 is another source of performance indicators. Virtual machine 125 can provide an indication of its internal monitoring system's detections such as whether the virtualized application 105 residing within virtual machine 125 has adequate or inadequate resource supply. Using this capability virtual machine 125 can provide a specific indicator indicating whether or not the virtual machine 125 is overloaded or exceeds the allocated capacity. Virtual machine 125 can also provide another indicator that indicates that virtual machine is approaching overload. The cloud service provider may provide an API to access this type of information from the virtual machine 125 that has been assigned to the operator.

The virtualized application 105 can also be equipped with a variety of performance indicators that are application-specific performance indicators. These may be indicators of the quality of the services provided to users of virtualized application 105 or internal metrics on the operation of the virtualized application 105. The vendor or the operator can include various APIs that allow accessing the performance indicators from the virtual application 105. Where virtualized application 105 is an IP-PBX system, an indicator indicating call quality may be provided. Such an indicator could provide indication of issues regarding missing and faulty packets, jitter and other quality factors affecting call quality. Other indicators could also be provided regarding the time required to offer dial tone in response to a service request or time required to cut through a connection during a specific operation of a specific feature such as call transfer. Specific internal metrics can also be provided regarding the length and stability in length of queues in media jitter buffers, throughput in transcoders, delays in acquiring specific signal processing functions such as conference units, and others that will now occur to a person of skill in the art. These indicators collectively and individually may be taken as indications of various resource usage levels such as memory allocation, network capacity, CPU capacity and others that will now occur to a person of skill in the art.

As a further illustrative example, for a virtualized web server the application-specific performance indicators can include time to transmit a web page with all its content, time to create dynamic content and others. As a further example, for a virtualized email server, application-specific performance indicators can include time to deliver mailbox contents to a client application or browser, time to process a new incoming email (including actions like scanning for viruses, black-list and white-list searches on sender) and others. These actions can involve significant communication with other servers and external web services.

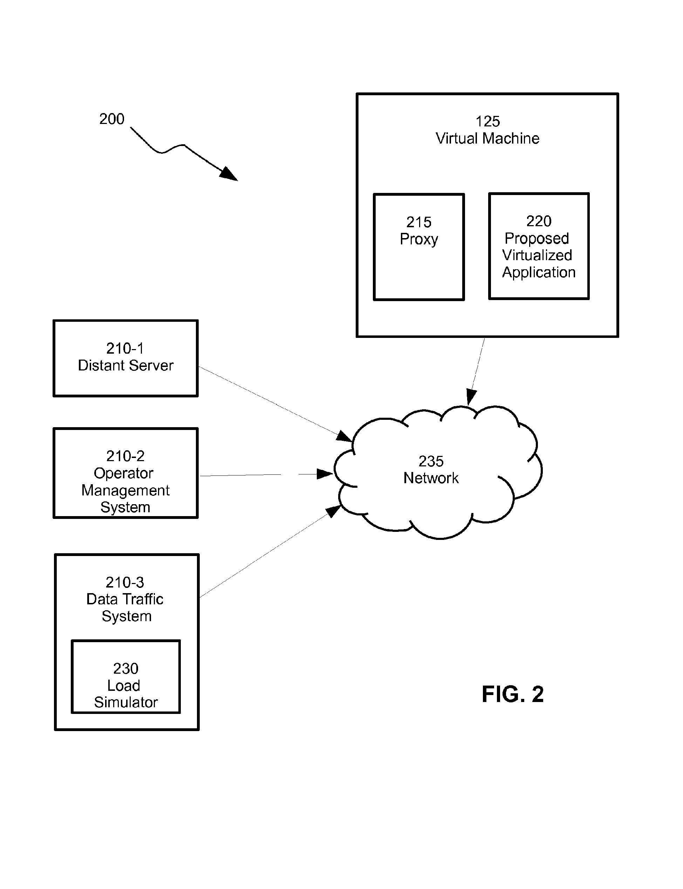

Referring now to Fig. 2 another system for determining virtual machine performance is indicated at 200. System 200 includes a virtual machine 125, set up, for example, based on requirements specified by a customer, a vendor and a cloud model as described above. Virtual machine 125 is intended to include a virtualized application that will be in communication with one or more computing apparatuses 210, located, for example, at one or more of the operator's sites or locations that can be co-located with cloud service provider's sites, or remote from cloud service provider's sites. The communication can be through a network 235. Accordingly, at least one computing apparatus 210 (computing apparatuses 210-1, 210-2 and 210-3) is connected, via network 235, to virtual machine 125. Collectively, computing apparatuses 210-1, 210-2 and 210-3 are referred to as computing apparatuses 210, and generically as computing apparatus 210. This nomenclature is used elsewhere herein.

Computing apparatuses 210 can be based on any suitable computing environment, and the type is not particularly limited so long as each computing apparatus 210 is capable of receiving data from virtual machine 125 and transmitting data to virtual machine 125. Computing apparatuses 210 may be configured to at least execute a client application and simulators that can interact with virtual machine 125. For example, computing apparatus 210 can be configured to perform the functions of many different systems such a distant server (210-1), an operator management system (210-2) or a simulated data traffic system (210-3) as shown in Fig 2. Computer apparatuses 210 can be operated by an operator, a system vendor, a cloud service provider or other parties. Other configuration for computer apparatus 210 will now occur to a person of sill in the art, and are within scope.

Certain apparatus factors can affect the performance of a virtualized application. For example, when a distant server 210-1, distant from the virtual machine 125, is utilized as part of the system set up by the operator, the latency of the connection between the virtual machine 125 and the distant server 210-1 can be important to the performance of the operator's system. For example, in the present example, where the virtualized application is to be an IP-PBX, user telephones and other devices at the operator site as well as the operator management system 210-2 interact with virtual machine 125. The latency, error and bandwidth properties of the communications with the virtual machine 125 can affect the perceived performance of the virtualized IP-PBX. For example, there could be a faulty or overloaded router located in network 235 that affects only some locations in the network. The router may be causing many retransmissions or lost packets, which is not reflected in latency metrics but could greatly impact application-specific performance metrics. In some variations, latency can depend on the traffic load generated by the applications executing at a computing apparatus 210, such as a load simulator 230.

Computing apparatuses 210 can be based on any type of computing environment, such as a tablet, a smart phone, a desktop, a server or any other computing platform that is known in the art. Each computing apparatus 210 includes at least one processor connected to a non-transitory computer readable storage medium such as a memory. Memory can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. Memory may include both a non-volatile memory for persistent storage computer-readable instructions and other data, and a volatile memory for short-term storage of such computer-readable instructions and other data during the execution of the computer-readable instructions. Other types of computer readable storage medium external to computing apparatus 210 are also contemplated, such as secure digital (SD) cards and variants thereof. Other examples of external computer readable storage media include compact discs (CD-ROM, CD-RW) and digital video discs (DVD).

A computing apparatus 210 can also include one or more input devices connected to at least one processor. Such input devices are configured to receive input and provide data representative of such input to the processor. Input devices can include, for example, a keypad, a pointing device and a scanner. A pointing device can be implemented as a computer mouse, track ball, track wheel, touchscreen or any suitable combination thereof. In some examples, computing apparatus 210 can include additional input devices in the form of one or more additional buttons, sensors, microphones and the like. More generally, any suitable combination of the above-mentioned input devices can be incorporated into computing apparatus 210. The input devices can be integral to a device or can be an add-on option which can be operably connected to the device as needed.

A computing apparatus 210 can further include one or more output devices. The output devices of computing apparatus 210 can include a display. When the pointing device includes a touchscreen, the touchscreen can be integrated with the display. Each computing apparatus 210 can also include additional output devices such as printers. The output devices can be integral to a device or can be an add-on option which can be operably connected to the device as needed.

Each computing apparatus 210 can also include one or more communications interfaces connected to the processor. The communications interface allows computing apparatus 210 to communicate with other computing devices, for example via network 125, as well as peripherals such as headsets, handheld scanners, and other input and output devices that will now occur to a person of skill in the art. At least one of the communications interfaces can be selected for compatibility with network 125. The communication interfaces may be wireless radios such as Bluetooth, cellular radio such as LTE, near field communications (NFC) or Wi-Fi, or they may be wired such as USB, serial or parallel ports.

Network 235 can comprise any network capable of linking virtual machine 125 with computer apparatuses 210 and can include any suitable combination of wired and/or wireless networks, including but not limited to a Wide Area Network (WAN) such as the Internet, a Local Area Network (LAN), Personal Area Network (PAN), cell phone networks, Wi-Fi networks, and the like.

Continuing with system 200, a proxy module 215 and proposed virtualized application 220 are provided at virtual machine 125 as two virtual machine based test modules. An additional test module, a load simulator 230, is provided at the data traffic system 210-3.

Proxy module 215 can include one or more test routines that, when executed, can stress capacity needs or loads, and evaluate performance based on certain resource requirements. At least some of these resource requirements can be negotiated with a cloud service provider. Other resource requirements can be application-specific resource requirements based on pre-determined application-specific performance-metric targets and would typically be excluded from the resources specified to the cloud service provider. Other resources can be those resources outside the control of the service provider. Other examples of resources will now occur to a person of skill in the art and are within scope.

Proposed virtualized application 220 is part or whole of the vended system which will form, when fully installed the virtualized application. Accordingly, in some embodiments, proposed virtualized application is equivalent to the intended virtualized application that will be operated by the operator. In other embodiments, proposed virtualized application 220 can include only portions of the intended virtualized application to be provided. In yet other embodiments, proposed vended system can be simulators for simulating all or portions of the intended virtualized application to be provided. Other variations of the relationship between proposed virtualized application 220 and the intended virtualized application will now occur to a person of skill in the art and are within scope. In some embodiments, proposed virtualized application 220 is capable of testing application-specific resource requirements by providing application-specific metrics for evaluation of the intended virtualized application.

The load simulator module 230 can generate a simulated customer load. The simulated customer load can be varied along multiple parameters such as volume and type so as to be able to evaluate the performance of the intended virtualized application in meeting operator requirements. Alternatively the virtual machine 125, along with the test modules may be set up on an operator's own physical servers or data centres. The physical configuration of the physical servers can be such that they can be used to test the identified resource requirements. Other type, location and combination of test modules will now occur to a person of skill in the art and are within scope.

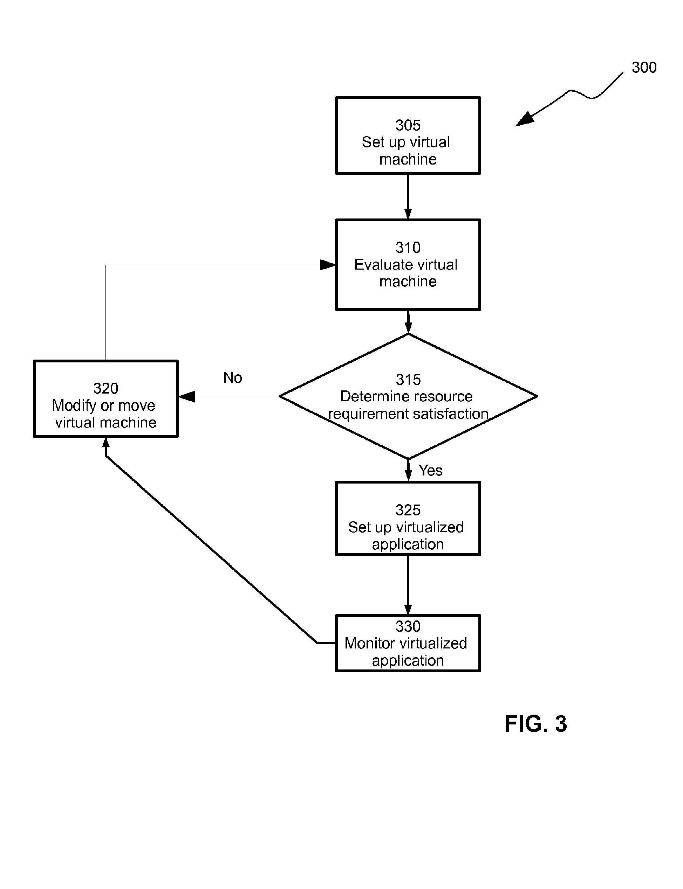

Referring now to Fig. 3, a method for selecting virtual machine performance is indicated at 300. In order to assist in the explanation of the method, it will be assumed that method 300 is operated using system 100 as shown in FIG.1, and system 200 as shown in Fig. 2. Additionally, the following discussion of method 300 leads to further understanding of system 100 and system 200. However, it is to be understood that systems 100 and 200, and method 300 can be varied, and need not work exactly as discussed herein in conjunction with each other, and that such variations are within scope.

Referring now to Fig. 3, a virtual machine is set up at 305. To set up a virtual machine 125, for example, an operator can use its own operator model in combination with a vendor model to generate required resource estimates, which can then be used to negotiate with a cloud service provider. Once the resource requirements are agreed upon, the cloud service provider can then create the required virtual machine 125, allocate it capacity on the basis of the negotiated resource requirements and make the virtual machine 125 available to the operator for use.

The negotiation between the operator and the cloud service provider for the creation of a virtual machine 125 will, in part, contain identified resource requirements that are identified, for example, by the operator and vendor models and that need to be maintained to obtain a predetermined performance for the virtualized application that will be implemented by the operator. However, resource requirements specified to the cloud service provider may not contain excluded resource requirements, for example those that can be associated with the specific virtualized application. Excluded resource requirements can form a portion of the identified resource requirements that are not specified to the cloud service provided for negotiations. There may be various reasons for the exclusion of some requirements from those specified to the cloud service provider. Some of the requirements, for example, may be unspecified due to inadequacies in the semantics of the communication used between the operator and the cloud service provider. Certain configurations or capabilities of equipment that are not contained in the semantics of the communications is an illustration of the limitations introduced by the semantics. As a further example, other requirements may be requirements that are not normally maintained or guaranteed by the cloud service provider. Speed of data transfer between separate virtual machines or virtualized applications provided by the same cloud service provider are examples of resources that the cloud service provider may not guarantee or maintain. As an additional example, other requirements may be outside of control of the cloud service provider such as the latency of an external network that is used to connect a virtual machine to an external computing apparatus 210 as part of the user utilization of a virtualized application, for example. Additionally, the bandwidth and latency of network 215 used to connect virtual machine 125 to the computing apparatuses 210 may be an important requirement that is not a specified requirement. Additional requirements can be requirements that are application-specific. For example, the degree of compatibility between the specific CPU family and version of the cloud provider's hardware and the compiler and options used when compiling the kernel and the virtualized application can all be considerations when identifying application-specific resource requirements. As a specific example, the compiler can use machine instructions that are only emulated on some CPUs but fully implemented on others. Other examples of considerations that affect application-specific resource requirements include: speed and bandwidth of RAM memory access; speed of various internal buses; floating point performance of the specific CPU family and version; basic input/output system (BIOS) version; firmware version of internal and external attached devices; outside the server hardware, the network topology around virtual machine 125, as well as computing apparatuses 210; speed of domain name system (DNS) servers used (different locations in the cloud may use different DNS servers); and speed of authentication servers used by virtual machine that may be part of the cloud provider's infrastructure (e.g., domain controllers, Remote Authentication Dial In User Service (RADIUS) servers, and others).

Continuing with method 300, at 310 the virtual machine 125 that is set up is evaluated. In many cases an operator will wish to evaluate, prior to setting up or operating a virtualized application, whether virtual machine 125 meets at least some of the identified requirements whether those requirements are specified to the cloud service provider or excluded from the requirements specified to the cloud service provider. To perform the evaluations, test modules such as proxy module 215, load simulator 230 and proposed virtualized application 220 may be used.

To perform evaluation of virtual machine 125, proxy module 215 may be caused to execute test routines that can test one or more resource requirements including those based on application-specific requirements to generate performance characteristics. In some embodiments, performance characteristics can include performance indicators. In other embodiments, performance characteristics can include those that are specific to the virtualized application. In yet other embodiments performance characteristics can be generated by means other than test routines. These and other variations that will now occur to a person of skill in the art are within scope.

The resource requirements can be tested, and performance characteristics generated, for example, by causing the capacity need or load of the intended virtualized application to approach its estimated maximums, while measuring whether the resources stay within the identified requirements. These test routines may be executed in cooperation with the proposed virtualized application 220. The tested resource requirements can be both those that are specified to the cloud service provider when negotiating the capacity allocation for virtual machine 125, and also those that were not specified, such as those that are outside the control of the cloud service provider. The tested resources can also include those resources that are application-specific and on which application based performance metrics are based. For example, proxy module 125 can be caused to execute test routines that can test the resources associated with network connections between the virtual machine 125 and one or more of the computer apparatuses 210 such as a distant server 210-1 or the data traffic system 210-3 which includes the load simulator module 230 for simulating a customer site with simulated traffic. One or more of the test routines can be executed serially, in parallel or in combination for various resources under various capacity needs or loads. Moreover, a test routine may be executed either manually or automatically such as programmatically. Instructions such as scripts or other programmatic methods to execute a test routine can be included locally, as part of the proxy module 215, or received through network 215 from one or more of the computer apparatuses 210. Proxy module 215 may also be instructed to run test routines that test resources such as available memory, internal bandwidth and latency for messaging and other resources contained within the virtual machine itself.

Referring back to Fig. 2, to evaluate a virtual machine 125 an operator, in addition to executing test routines of the proxy module 215, can also utilize capacity or load and service level testing performed by the load simulator 230 which can simulate user loads and cause generation of performance characteristics. These tests may be performed in cooperation with the proxy module 215 and/or the proposed virtualized application 220. Additional computer apparatuses 210 located elsewhere in the network may be used to participate in these tests as well by triggering one or more operations of the proposed virtualized application 220. Evaluation of whether resource requirements are met for the proposed virtualized application 220 can be done under various test conditions of capacity needs or loads and feature mixes. For example, where the intended virtualized application is an IP-PBX, media packets with errors and delays may be measured as indicators for determining whether the performance of acoustic resources satisfy the identified acoustic resource requirements. Moreover, acoustic requirements can be an example of excluded resources requirements, namely resource requirements that are excluded from those specified to the cloud service provided; in this example, the cloud service provider would not have the means to monitor acoustic resource requirements. In addition, evaluation process can also measure delay to dial tone, excessive latency on media connections, and errors with feature operations and others that will now occur to a person of skill in the art. Accordingly, in some embodiments, specific testing can be performed for application-specific resource requirements of specific proposed applications. In other embodiments, generic testing can be performed in addition with or as an alternative to specific testing. Generic testing can measure multiple conditions of capacity needs, one of more of which can be suited to the specific proposed virtualized application 220 under consideration. This can include making measurements that indicate user evaluation of the performance of the proposed virtualized application 220 for one or more resources.

In some embodiments, results of previously performed test measurements can be used to evaluate a virtual machine 125. A parking database can be provided that stores previously measured performance characteristics of virtual machines as set up at different locations within the private operations of a cloud service provider and with different cloud service providers or both. Performance characteristics can indicate resource levels available under different capacity needs or loads. The parking database can be prepared by performing tests based on various test modules at a variety of locations with various configurations of external servers, class or type of proposed virtualized applications. Accordingly, the parking database contains performance characteristics of a number of alternatives for any proposed virtualized application. The parking database can be used as a method of evaluating the suitability of a location or a cloud service provider for use with a proposed virtualized application 220 without the need to perform tests before setting up the intended virtualized application. Therefore instead of evaluation being performed for a proposed system as described above, the database may be consulted and a virtual machine with suitable performance and/or cost may be selected.

Resource requirements for the intended virtualized application can be identified and the suitability of a variety of virtual machines evaluated on the bases of the performance database in order to decide as to where the instantiation can be created such that it will satisfy the identified resource requirements. In a variation, the parking database can contain data for types or classes of proposed virtualized application. In another variation, the parking database, can also contain an estimated cost for the system.

The Parking database can be made accessible either locally or on a networked computer apparatus 210. User interfaces can be provided through which the details contained within the parking database can be viewed and edited. Creation of the database may be triggered either manually or automatically such as programmatically and can be based on a schedule. Locations for the database may be stored in a file that can be accessed and updated manually or automatically. Other methods of creating and updating a parking database will now occur to a person of skill in the art and is within scope.

Continuing with method 300, at 315 satisfaction of identified resource requirements is determined on the bases of the evaluation results. Determination of whether the resource requirements are satisfied can be carried out based on required standards for latency, bandwidth, errors etc. under different conditions capacity needs or loads. The determination can be based on a predetermined satisfaction criteria. Accordingly, the determination can be based on comparing some or all of the predetermined satisfaction criteria based on identified resource requirements with measured performance characteristics. The resource requirements on which the criteria is based can be grouped or prioritized for the purposes of the determination. These and other variations will now occur to a person of skill in the art and are within scope.

The determination can be carried out by one or more of the test modules or at one or more of the computer apparatuses 210 such as at an operator management system on in a combination of both. The determination can be performed manually or automatically, such as programmatically. The determination can be based on one or more or of the identified resource requirements.

Where determination is made at 315 that the capacity allocation for virtual machine 125 does not satisfy at least some of the identified resource requirements for proposed virtualized application 220, virtual machine 125 can be modified or moved (step 320). The action to modify or move virtual machine 125 is taken so as to enable satisfying more or all of the resource requirements. For example, in one variation, the capacity allocation for virtual machine 125 can be altered to remedy any deficiencies identified in testing. In other variations, a different virtual machine can be set up either with the same cloud service provider or a different cloud service requirement to address the deficiencies identified by testing. The parking database may be consulted for the suitability of a location or searched to identify a new location that is more satisfactory for resource requirements. These and other variations of addressing deficiencies identified by testing are within scope.

Continuing with method 300, where virtual machine 125 is modified or moved, the modified or moved virtual machine can be subject to validation itself by repeating 310 for the modified or moved virtual machine. By re-performing 310, testing can be used to evaluate a proposed move or modification before the virtualized application is actually set up. Additionally or alternatively, the parking database can be consulted for the suitability of the new location. Once the newly modified or relocated virtual machine is evaluated, a determination is made whether measured performance characteristics satisfy the predetermined criteria that is based on one or more of the identified resource characteristics. In the present example, it will be assumed that the predetermined criteria are satisfied, and method 300 advances to 325.

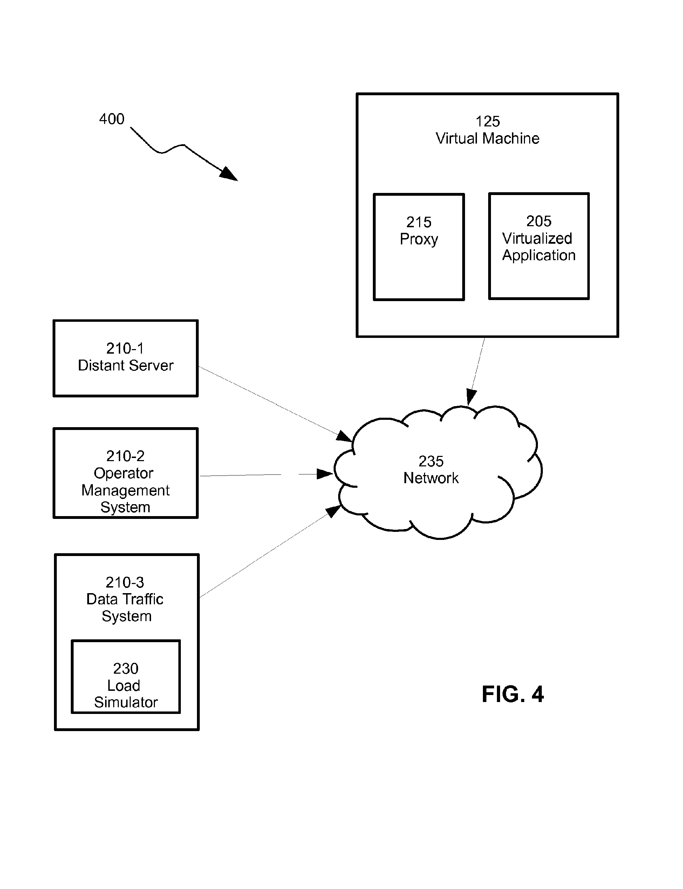

Continuing with method 300, at 325 a virtualized application is set up. The cloud service provider can supply the operator with the required addresses and authorization keys and other appropriate access items necessary to access the virtual machine 125. Using the supplied access items, the operator can place the virtualized application 205 within the virtual machine 125, alongside proxy module 215 of system 400 as shown in Fig. 4. Once the virtualized application 205 is set up within the allocated virtual machine 125, the operator can accordingly begin to operate and offer services to its own internal and/or external users. Based on the evaluation done, it is expected that virtualized application 205 can satisfy all or a portion of the identified requirements so as to provided acceptable performance within the limits of the expected capacity needs and feature mix.

Referring back to Fig. 3, at step 330 performance of virtualized application 205 is monitored. As shown in Fig. 4, proxy module 215 can be used as part of the active management of the virtualized application 205 during its operation. Proxy module 215 can be used to determine whether inadequate or excess resources allocated to virtualized application 205 resulting either in unacceptable performance or cost inefficiency by providing additional performance characteristics. In such a case, it may be desired to move the virtualized application to a modified or relocated virtual machine that allows the provision of resources that better satisfies the satisfaction criteria for virtualized application 205. Any proposed move may then be evaluated using either or both the proxy and parking technologies described above.

In a variation, performance indicators can be received from virtualized application 205, and the determination of whether resource requirements can be met can be based on a comparison of the performance indicators with the predetermined criteria.

Adaptation system 150 of Fig. 1 can also be given the capability to trigger virtual machine moves. The adaptation system 150 can be provided with a schedule of expected service load and based on that schedule can trigger a move to a more suitable location at appropriate times such as a predetermined amount of time prior to significant increase in capacity needs or load. As well, the adaptation system 150 can determine that the adapted load that it has created is significantly below the initially reserved resource allocation for the virtual machine 125 and trigger a move to more suitable locations. Additionally, the adaptation system can determine that resources are inadequate at a specific location to meet resource requirements for the virtual machine 125 current load. Accordingly, it can then automatically trigger a move of the virtual machine 125. The triggered moves can use the proxy and or parking technology to carry out the move to a more suitable location.

The movement of the virtual machine 125 can also be triggered manually. A user interface can be provided with which the current performance and/or resource usage of a virtual machine 125 can be viewed and the move of virtual machine 125 triggered manually. Alternatively, a system operator may know, by some means, that a change in load or capacity needs for virtual machine 125 is imminent, for example as a result of a scheduled backup or a large report being run. The system operator may then trigger a move or schedule the move to happen at an appropriate time. The system operator may be given the capability of creating a script that will automatically trigger moves based on a schedule and/or on measured system performance and resource usage.

The movement of virtual machine 125 can also be based on schedules that reflect estimated resource and capacity requirements of a virtualized application 105. For example, schedules can be based on historical data which can then be used as a way of anticipating application-specific capacity need or load behaviour during certain time of the day. Accordingly, a system operator may know when changes in load or capacity needs for virtualized application 105 occur. For example, daily backup operation in the middle of the night require more input/output and networking capacity to ensure backup operation is completed in timely manner with minimal impact to the normal operation of the application. As a further example, at the start of the day, majority of call centre agents may login to the call centre server within a short period of time, thus increasing the volume of calls handled. Update policies can be set up to predict the need for additional capacity needs during the start of the day to support larger agents login requests. In a further example, large reports may need to be generated at specific times. In another example, schedule changes can be learned based on historical capacity need or load statistics. In further examples, the schedules can be self-adjusting. It will now occur to a person of skill in the art that there are other means of predicting capacity changes on which schedules can be based. These are within scope.

Method 300 can be used for reasons of cost as well as system performance. So 300 can be used from time to time, either periodically, or randomly or based on a schedule to evaluate the current costs for a suitable virtual machine form multiple providers. Moves can then be triggered to a location with the most appropriate performance and cost.

The parking database information for multiple suppliers can be made available so that it can be supplied to cloud providers as a part of negotiation process. Cloud service providers can be given access to suitably altered or otherwise anonymised information so that comparative cost and performance information of other cloud service providers can be made available. This may be used as part of a negotiating process for new installations or to resolve issues with existing installations. This information can be made available from a web server. The web server may require suitable authentication procedures to be carried out for access.

In further variations, updated vendor model 140 can be used for system verification and initial generation of the vendor model by vendors. Thus a vendor can take a system under development, place simulated capacity requirements on it and determine the values required for its databases.

The many features and advantages of the invention are apparent from the detailed specification and, thus, it is intended by the appended claims to cover all such features and advantages of the invention that fall within the true scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A method, for a computing apparatus having a network interface, of evaluating a virtualized application, said method comprising:
receiving, through said network interface, performance characteristics for a virtual machine;
receiving, through said network interface, predetermined criteria based on resource requirements for a proposed virtualized application;
determining, at said computing apparatus, whether said predetermined criteria are satisfied based on said performance characteristics; and
transmitting instructions, through said network interface, to cause said proposed virtualized application to be set up within said virtual machine if said predetermined criteria are satisfied.

2. The method of claim 1 wherein at least one of said performance characteristics is an application-specific performance indicator from said proposed virtualized application.

3. The method of claim 1 or 2 wherein said performance characteristics include at least one generated by a proxy module provided within said virtual machine.

4. The method of any preceding claim further comprising:
transmitting instructions, through said network interface, to cause said virtual machine to be moved based on a trigger from an adaptation system, and optionally wherein said triggering is based on a schedule of expected capacity needs.

5. The method of any preceding claim wherein said performance characteristics are received from a proxy module provided within said virtual machine.

6. The method of any preceding claim further comprising:
querying a parking database, said query including an identification of said proposed virtualized application; and
wherein at least one of said performance characteristics received from said parking database is based on said identification.

7. The method of any of claims 1 to 5 further comprising:
querying a parking database, said querying including an identification of a class of said proposed virtualized application; and
wherein at least one of said performance characteristics received from said parking database is based on said identification of said class.

8. The method of any preceding claim further comprising:
receiving, through said network interface, performance characteristics for an additional virtual machine;
selecting, at said computing apparatus, one of said virtual machines based on said determination; and
wherein said transmitted instructions include an identification of said selected virtual machine such that said proposed virtualized application is caused to be set up within said selected virtual machine.

9. The method of any preceding claim wherein said performance characteristics are generated based on application-specific testing specific to said proposed virtualized application, and optionally wherein said application-specific testing is based on measuring one or more of acoustic characteristics, delay to dial tone and excessive latency on media connections.

10. The method of any preceding claim wherein said predetermined criteria are based on application-specific resource requirements for said proposed virtualized application excluded from cloud service provider negotiations.

11. A computing apparatus for evaluating a virtualized application, said computing apparatus comprising:
a network interface;
a processor connected to said network interface, said processor configured for:
receiving, through said network interface, performance characteristics for a virtual machine;
receiving, through said network interface, predetermined criteria based on resource requirements for a proposed virtualized application;
determining, whether said predetermined criteria are satisfied based on said performance characteristics; and
transmitting instructions, through said network interface, to cause said proposed virtualized application to be set up within said virtual machine if said predetermined criteria are satisfied.

12. The computing apparatus of claim 11 wherein at least one of said performance characteristics is an application-specific performance indicator from said proposed virtualized application.

13. The computing apparatus of claim 11 or 12 wherein said processor is further configured for:
querying a parking database, said query including an identification of said proposed virtualized application; and
wherein at least one of said performance characteristics received from said parking database is based on said identification.

14. The computing apparatus of claim 11 or 12 wherein said processor is further configured for:
querying a parking database, said query including an identification of a class of said proposed virtualized application; and
wherein at least one of said performance characteristics received from said parking database is based on said identification of said class.

15. A data centre comprising:
at least one processor configured for:
providing a virtual machine comprising:
a proxy module including at least one test routine;
a proposed virtualized application; and
executing said at least one test routine for one or more resources in cooperation with said proposed virtualized application;
and optionally:
wherein executing said at least one test routine cause the capacity need of said proposed virtualized application to approach its estimated maximums; said processor further configured for: measuring performance characteristics for said one or more resources; or
wherein said resources include one or more of resources associated with network connections between said virtual machine and one or more computer apparatuses; or
further including: a network interface in communication with said at least one processor for receiving, from one or more computer apparatuses, simulated user loads for causing the capacity need of said proposed virtualized application to approach its estimated maximums.
